# EUROPEAN PATENT APPLICATION

(11) **EP 2 465 881 A1**
(43) Date of publication of application: **20.06.2012**
(21) Application number: 11193672.0
(22) Date of filing: 15.12.2011
(51) Int. Cl.: C08F 279/06, C08F 6/22, C08L 69/00, C08L 101/00

(54) **Impact modified thermoplastic composition with hydrolytic sensitivity to obtain higher fluidity while keeping high impact strength**

(30) Priority: 15.12.2010 FR 1060583
(71) Applicant: Arkema France, 92700 Colombes (FR)
(72) Inventor: Navarro, Christophe, 64100 Bayonne (FR); Girois, Stéphane, Norfolk, VA Virginia 23508 (US); Bay, Elisabeth, Hagetmau 40700 (FR); Saint-Martin, Jean-Claude, 65140 Escondeaux (FR); Bergeret-Richaud, Magali, 69100 Villeurbanne (FR)

(57) **Abstract**

The present invention relates to, amongst other things, a process for manufacturing an impact modifier, concerns impact modified thermoplastic molding compositions and in particular a process for manufacturing and recovering the impact modifiers and their use in polymeric thermoplastic compositions.
More particularly the present invention relates to a polymeric impact modifier with a core-shell structure manufactured by a multistage process comprising a special recovery process so that the composition of the thermoplastic polymer containing the impact modifier has a high fluidity while keeping its high impact strength.

## Description

### [Field of the invention]

The present invention relates to, amongst other things, a process for manufacturing an impact modifier, concerns impact modified thermoplastic molding compositions and in particular
a process for manufacturing and recovering the impact modifiers and their use in polymeric thermoplastic compositions.
More particularly the present invention relates to a polymeric impact modifier with a core-shell structure manufactured by a multistage process comprising a special recovery process so that the composition of the thermoplastic polymer containing the impact modifier has a high fluidity while keeping its high impact strength.

### [Technical problem]

Thermoplastic compositions and especially aromatic polycarbonates may be employed in numerous applications, such as electrical, engineering and automotive applications. Typically, high molecular weight aromatic polycarbonates are employed in electrical and engineering applications because of their relatively high strength, high impact resistance. However, high molecular weight polycarbonates typically exhibit relatively poor melt flow characteristics, which may restrict their applications. In particular, high molecular weight aromatic polycarbonates typically exhibit relatively low melt flow rates. Consequently, it is typically more difficult to form intricate moulded parts and moulded articles with low levels of residual stress from such aromatic polycarbonates.

It is, as well, important to have an impact modifier powder that has no negative influence on the thermoplastic polymer. As negative influence, it is understood, for example the color stability of the thermoplastic polymer comprising the impact modifier, either on function of the time or the temperature or both.
All these influences might occur due to the architecture of the core-shell but more particularly the impurities and side products employed during the synthesis and treatment of the impact modifier powder. Usually, there is no special purification step of the impact modifier, just a separation of solid versus liquid. Therefore more or less important quantities of any chemical compound (impurities, by-products) employed are still incorporated in the impact modifier. These chemical compounds should not influence the thermoplastic material in a major way as for example degradation of optical and/or mechanical properties with time and/or temperature and/or hygrometry.

It is also, as well important, to separate the impact modifier from the reaction medium in the easiest way, meaning essentially the use of less of resources as possible. As resources can be seen equipment involved, energy, and more generally utilities and any products.

In order to overcome the low fluidity of aromatic polycarbonates, blends of the polycarbonate with other polymer resins have been employed. For example, blends of aromatic polycarbonates and acrylonitrile-butadiene-styrene (ABS) have been used to enhance the melt flow of the polycarbonate. However a disadvantage which may result from blends of aromatic polycarbonates and ABS include a reduction in the Vicat softening point and a reduction in the impact resistance compared to the aromatic polycarbonate alone at temperatures above 0°C

One objective of the invention is therefore to solve the aforementioned technical problems associated with processing a impact modified thermoplastic polymer and especially a aromatic polycarbonate or a blend of a aromatic polycarbonate and another polymer, particularly a thermoplastic blend of an aromatic polycarbonate and another polymer.

A further objective of the invention is to have thermoplastic composition containing an impact modifier that has a good compromise between all the properties of the impact modified thermoplastic polymer as having high impact strength, while reducing the viscosity of the polymer composition and no color change (yellowing) at elevated temperatures, due to the influence of impurities or by-products used during the preparation of the impact modifier.

### [BACKGROUND OF THE INVENTION] Prior art

The document W02008/149156 describes a polymer composition comprising an aromatic polycarbonate, a graft copolymer including polyacrylonitrile and a non crosslinked acrylic polymer for melt processing applications such as injection moulding.

The document EP0668318 describes a stabilized modifier and impact modified thermoplastics. The impact modifier is a stabilized MBS core-shell graft polymer stabilized by a hindered phenol and optionally a pH buffer system for a pH in a range of about 7 to 11. One example uses a buffer based on sodium hydroxide and phosphoric acid to bring the pH to 7.5 to 8.0. The stabilized MBS polymer was recovered by spray drying.

The document W02009/118114 describes an impact modified polycarbonate composition with a good combination of color, hydrolysis and melt stability. The rubber core is based on polybutadiene. The pH value between 2 and 11 of the impact modifier is adapted by buffers, acids or basic compounds as NaOH and KOH.

The document US2004/0102564 describes a method for producing thermoplastic molding materials containing rubber. After the polymerization of the rubber polymer a pH buffer system is added to the aqueous phase in order to reduce the mold deposit of the thermoplastic molding. The pH range for the buffer system is large and the choice of the buffer system as well.

### [Brief description of the invention]

Surprisingly it discovered that the pH value during the precipitation agglomeration step is important for the coagulation and the performance of the product in the thermoplastic resin. It could be not sufficient to have a certain pH for the final product, but already respect a certain pH during the recovery step. The nature of the species (either acidic or basic) used to control the pH is also important for the performance of the product in the thermoplastic resin.

Surprisingly it has also been discovered as well that the recovery process of a core-shell impact modifier by agglomeration with means of an aqueous electrolyte solution in form of a buffer solution is possible.

Unexpectedly, it has been found that by employing a core-shell copolymer impact modifier obtained with a recovery processes discovered herein, typically provides a thermoplastic composition having the desired Melt Flow Rate whilst still retaining an acceptable and relatively high impact strenght and an acceptable yellowing under aging conditions.

### [Detailed description of the invention]

According to a first aspect the invention concerns a process for producing an impact modifier comprising following steps
a) synthesis of a core-shell copolymer by emulsion polymerization
b) coagulation of the core shell polymer at a pH between 4 and 8 by addition of an aqueous electrolyte solution,
   wherein the aqueous electrolyte solution comprises an aqueous buffer solution.

According to another aspect the invention concerns a process for producing an impact modifier comprising following steps
a) synthesis of a core-shell copolymer by emulsion polymerization
b) coagulation of the core shell polymer at a pH between 4 and 8 by addition of an aqueous electrolyte solution,
wherein the aqueous electrolyte solution consists of an aqueous buffer solution.

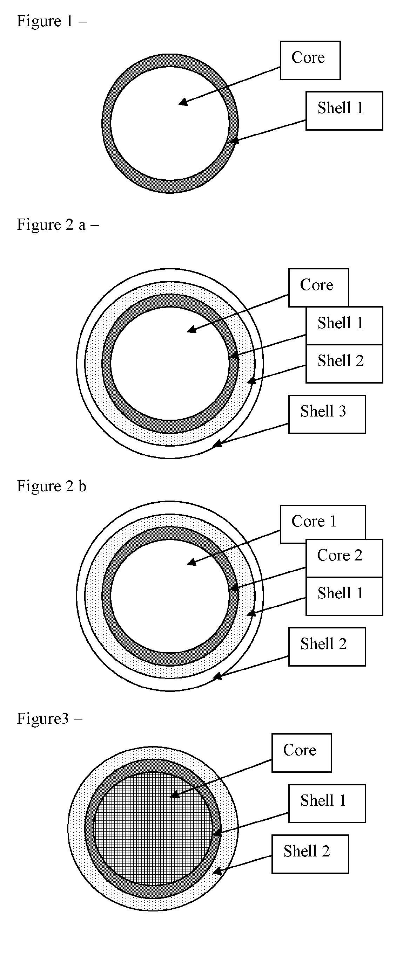

By the term "impact modifier" as used is denoted a compound comprising an elastomer or rubber that can be added or incorporated in a thermoplastic compound to improve its impact resistance.
By the term "buffer" as used is denoted a mixture of a weak acid and its conjugated base or a weak base and its conjugated acid or mixed systems.
By the term "weak acid" or "weak base" as used is denoted an acid or a base that is partially dissociated in aqueous solution.
By the term "rubber" as used is denoted the thermodynamic state of the polymer above its glass transition.
By the term "alkyl(meth)acrylate" as used is denoted the to both alkyl acrylate and alkyl methacrylate.
By the term "copolymer" as used is denoted that the polymers consists of at least two different monomers.
By "multistage polymer" as used is denoted a polymer formed in sequential fashion by a multi-stage emulsion polymerization process with at least two stages that are different in composition. Preferred is a multi-stage emulsion polymerization process in which the first polymer is a first-stage polymer and the second polymer is a second-stage polymer, i.e., the second polymer is formed by emulsion polymerization in the presence of the first emulsion polymer.
By the term "core-shell polymer" as used is denoted a polymers having structures for example as shown in figures 1-3, but not limited there to.
By the term "particle size" as used is denoted the volume average diameter of a particle considered as spherical as measured by light diffusion using laser spectrometry.
By the term "powder" as used are denoted polymer particles having a volume average diameter over 1 µm.
By the term "parts" as used herein is denoted "parts by weight". Unless otherwise stated, "total parts by weight" do not necessarily add to 100.

By the term "neutral pH" as used herein is denoted a pH from 6.0 to 7.5.

**With regard to the production or synthesis process**, the core-shell impact modifier is an emulsion graft copolymer having a butadiene-based core polymer and one or more shell polymers. A graft copolymer, is obtained by graft-polymerizing a monomer or monomer mixture containing at least an aromatic vinyl, alkyl methacrylate or alkyl acrylate in the presence of a latex containing a butadiene-based rubber polymer.

Polymerization initiators useful in producing the graft copolymer include, but are not limited to a persulfate salt such as potassium persulfate, ammonium persulfate, and sodium persulfate; an organic peroxide such as tert-butyl hydroperoxide, cumene hydroperoxide, benzoyl peroxide, lauroyl peroxide, p-menthane hydroperoxide, and diisopropylbenzene hydroperoxide; an azo compound such as azobisisobutyronitrile, and azobisisovaleronitrile; or a redox initiator. However, it is preferable to use catalytic systems of redox type formed by the combination of a peroxide compound, for example as mentioned above, with a reducing agent, in particular such as alkali metal sulfite, alkali metal bisulfite, sodium formaldehyde sulfoxylate (NaHSO₂HCHO), ascorbic acid, glucose, and in particular those of the said catalytic systems which are water-soluble, for example potassium persulfate/sodium metabisulfite or alternatively diisopropylbenzene hydroperoxide/sodium formaldehyde sulfoxylate or even more complicate systems as for example ferrous sulfate/dextrose/sodium pyrophosphate.

Use may be made, as emulsifying agent, of any one of the known surface-active agents, whether anionic, nonionic or even cationic. In particular, the emulsifying agent may be chosen from anionic emulsifying agents, such as sodium or potassium salts of fatty acids, in particular sodium laurate, sodium stearate, sodium palmitate, sodium oleate, mixed sulphates of sodium or of potassium and of fatty alcohols, in particular sodium lauryl sulphate, sodium or potassium salts of sulphosuccinic esters, sodium or potassium salts of alkylarylsulphonic acids, in particular sodium dodecylbenzenesulphonate, and sodium or potassium salts of fatty monoglyceride monosulphonates, or alternatively from nonionic surfactants, such as the reaction products of ethylene oxide and of alkylphenol or of aliphatic alcohols, alkylphenols. Use may also be made of mixtures of such surface-active agents, if necessary.

**With regard to the core-shell copolymer,** this is in the form of fine particles having a rubber core and at least one thermoplastic shell, the particle size being generally less than 1 µm and advantageously between 50nm and 500nm, preferably between 100nm and 400nm, and most preferably 150nm and 350nm, advantageously between 170nm and 350nm.
The core-shell particle has preferably more than one shell. At least the outer shell, in contact with the thermoplastic matrix, has a glass transition temperature (Tg) greater then 25°C, preferably greater then 50°C.
The core-shell impact modifier is prepared by emulsion polymerization. For example a suitable method is a two-stage polymerization technique in which the core and shell are produced in two sequential emulsion polymerization stages. If there are more shells another emulsion polymerization stage follows.
The core-shell ratio is not particularly limited, but preferably in a range in weight between 10/90 and 90/10, more preferably 40/60 and 90/10 advantageously 60/40 to 90/10 and most advantageously between 70/30 and 85/15.

**With regard to the core** according to the invention, this is a rubber polymer. The glass transition temperature (Tg) of the rubber core is less then 0°C, preferably less then -10°C, advantageously less then -20°C and most advantageously less then - 25°C and more most advantageously less then -40°C.
Preferably the rubber core has a glass transition temperature between -120°C and -10°C and more particularly between -90°C and - 40°C, preferably between -80°C and -40°C and more preferably between - 80°C and - 50 °C.

By way of example, the rubber polymer of the core, mention may be made of isoprene homopolymers or butadiene homopolymers, isoprene-butadiene copolymers, copolymers of isoprene with at most 98 wt% of a vinyl monomer and copolymers of butadiene with at most 98 wt% of a vinyl monomer. The vinyl monomer may be styrene, an alkylstyrene, acrylonitrile, an alkyl (meth)acrylate, or butadiene or isoprene. In a preferred embodiment the core is a butadiene homopolymer.
The core of the core-shell copolymer may be completely or partly crosslinked. All that is required is to add at least difunctional monomers during the preparation of the core; these monomers may be chosen from poly(meth)acrylic esters of polyols, such as butanediol di(meth)acrylate and trimethylolpropane trimethacrylate. Other multifunctional monomers are, for example, divinylbenzene, trivinylbenzene, and triallyl cyanurate. The core can also be crosslinked by introducing into it, by grafting or as a comonomer during the polymerization, unsaturated functional monomers such as anhydrides of unsaturated carboxylic acids, unsaturated carboxylic acids and unsaturated epoxides. Mention may be made, by way of example, of maleic anhydride, (meth)acrylic acid and glycidyl methacrylate. The crosslinking may also be carried out by using the intrinsic reactivity of the monomers, for example the diene monomers.
The core can also be covered by a core layer. By core layer is meant that the polymer composition of that core layer has glass transition temperature (Tg) of less then 0°C, preferably less then -10°C, advantageously less then -20°C and most advantageously less then -25°C.

For preparing the rubber core with a diameter of 50-250nm of the core-shell particle different processes can be used: the grow-out process, the seeded grow-out process and an agglomeration process. The grow-out process is preferred in order to have a narrower homogenous particle size distribution and avoiding fine particles. Chain transfer agents are also useful in forming the core polymer. Useful chain transfer agents include those known in the art, including but not limited to ter- dodecylmercaptan, n-docdecylmercaptan, n-octylmercaptan, and mixtures of chain transfer agents. The chain transfer agent is used at levels from 0 to 2 percent by weight, based on the total core monomer content. In a preferred embodiment, 0.1 to 1 percent chain transfer agent is used in forming the core polymer.

**With regard to the shell(s)** according to the invention, these are styrene homopolymers, alkylstyrene homopolymers or methyl methacrylate homopolymers, or copolymers comprising at least 70 wt% of one of the above monomers and at least one comonomer chosen from the other above monomers, another alkyl (meth)acrylate, vinyl acetate and acrylonitrile. The shell may be functionalized by introducing into it, by grafting or as a comonomer during the polymerization, unsaturated functional monomers such as anhydrides of unsaturated carboxylic acids, unsaturated carboxylic acids and unsaturated epoxides. Mention may be made, for example, of maleic anhydride, (meth)acrylic acid glycidyl methacrylate, hydroxyethyl methacrylate and alkyl(meth)acrylamides. By way of example, mention may be made of core-shell copolymers having a polystyrene shell and core-shell copolymers having a PMMA shell. The shell may also contain imide functional groups, either by copolymerization with a maleimide or by chemical modification of the PMMA by a primary amine. Advantageously, the molar concentration of the imide functional groups is 30 to 60% (relative to the entire shell). There are also core-shell copolymers having two shells, one made of polystyrene and the other, on the outside, made of PMMA. Examples of copolymers and their method of preparation are described in the following patents: US 4 180 494, US 3 808 180, US 4 096 202, US 4 260 693, US 3 287 443, US 3 657 391, US 4 299 928, US 3 985 704 and US 5 773 320.
The shell(s) may be crosslinked by adding a at least one multifunctional monomer during the preparation of the respective shell.

**With regard to structure and the properties** of the core-shell copolymer there is the polymeric core, which is a rubber, and at least one polymeric layer. The physical property the young modulus of the polymeric rubber core is always less then the modulus of the other polymeric layer or layers.

Usually the working up or recovery (meaning the isolation of the core-shell polymers from the emulsion) is carried out by means of spray drying or by means of precipitation or coagulation and separation of the dispersing water.

In the case of the present invention working up is done by means of coagulation and separation of the dispersing water. The coagulation precipitation is made with an electrolyte addition comprising an aqueous buffer solution.

**With regard to the buffer** according to the invention, it is a buffer that works in a pH range between 4 and 8, preferably between 5 and 7.5 advantageously between 6 and 7.5 and most advantageously between 6 and 7.

The separation of the coagulated and precipitated polymer and the water can take place by conventional methods for example sieving, filtration, decantation or centrifugation. After separating off the dispersing water, a moist graft polymer is obtained, which usually has residual water content of up to 60 wt. %.

**With regard to the recovery process** the pH of the latex of the core-shell copolymer particle before the coagulation step is between 4 and 7.5 preferably between 5 and 7. Advantageously the pH during the coagulation step b) is between 6 and 7. The pH value of step b) is adjusted by addition of an aqueous buffer solution and precipitated at the same time.
If the pH value before the coagulation step is far outside (at least 1 pH unity) of the pH interval, it is possible to add only one component for the buffer of the aqueous buffer solution, either the proton donor or the proton acceptor. The pH value of the latex causes that some of the buffer component will be protonated or deprotonated with the result of establishing the buffer equilibrium. For instance trisodium phosphate may be added to a latex having a pH<3, the phosphate is protonated to give hydrogenphosphate or/and dihydrogenphosphate and the buffer is produced for adjusting and precipitation at the same time.

The buffer solution is an aqueous solution consisting of a mixture of a weak acid and its conjugate base or a weak base and its conjugate acid or mixed systems.

As example of buffer solution, one can mention, buffer of carbonic acid (H₂CO₃) and bicarbonate (HCO₃⁻) present in blood plasma, to maintain a pH between 7.35 and 7.45, or citric acid and sodium citrate buffer solution, or phosphate buffers based on tri pottasium phosphates, dipotassium and monopotassium phosphates or trisodium phosphates, disodium and monosodium phosphates or citric acid and disodium phosphate.
Preferably, phosphate buffer solutions are used in the present invention and more preferably, phosphate buffer solution prepared to be able to keep pH value between 6 and 7.
The aqueous phosphate buffer solution according to the invention comprises a buffer based on at least on compound chosen from tri pottasium phosphates or dipotassium or monopotassium phosphates or trisodium phosphates or disodium or monosodium phosphates or mixtures thereof.
Preferably the coagulation is carried out by only ading the buffer solution, no other additional electrolyte is added.

Another aspect of the invention is that the process can comprise a optional further step ab) between step a) and step b), characterized by controlling the pH value of the core-shell copolymer particle after the synthesis step a).
The control of the pH can be done with a pH meter. It is obvious that the pH control is not necessary if it is known by the well established reaction conditions what pH value is exactly obtained at the end of the synthesis step. By control is also meant the knowledge and certitude that the pH value is inside a certain interval at the end of the synthesis step.

Another aspect of the invention is that the process can comprise an optional further step c) - after step b) - characterized that the pH of the coagulated core-shell polymer is adjusted at a pH between 6 and 7.5 and advantageously between 6 and 7.

The pH value of the core shell impact modifier should not be too alkaline as it influences directly the degradation of the thermoplastic matrix, meaning the heat ageing in view of coloration of the thermoplastic resin wherein the core-shell impact modifier of the invention is used.

Therefore the pH value of the final core-shell impact modifier should be smaller then 7.5, advantageously smaller then 7.

The adjustment of the pH after coagulation can be made if necessary by electrolytes as solutions of for example inorganic salts such as sodium sulfate, calcium sulfate, sodium dihydrogenophosphate, disodium hydrogenophosphate, potassium dihydrogenophosphate, dipotassium hydrogenophosphate, calcium. Inorganic salts can be used from the anhydrous or the hydrated form when it exists, as for example magnesium sulfate anhydrous or magnesium sulfate heptahydrous. Advantageously the electrolyte is chosen from inorganic salts and preferably among phosphates and sulfates anions and among sodium, potassium, magnesium and calcium cations, as for example magnesium sulfate, calcium sulfate, disodium hydrogenophosphate, potassium dihydrogenophosphate. The electrolytes are used in form of an aqueous solution of one or more thereof.
Strong inorganic bases like NaOH, KOH, LiOH, Ca(OH)2 and more generally ammonia and most organic bases which release OH- ions due to hydrolysis have to be avoided.

The coagulation is carried out at temperatures of from 5°C to 100°C, preferably from 10°C to 100°C, particularly preferably from 15°C to 100°C advantageously from 20°C to 90°C. The latex coming from the synthesis used for the coagulation has a solid content between 15% and 60 % in weight and preferably between 25% and 50%. The aqueous solution of the electrolyte contain concentrations in salt small enough to insure solubility of the species, taking into account their solubility constant in water at 25°C.

The separation of the coagulated and precipitated polymer and the water can take place by conventional methods for example sieving, filtration, decantation or centrifugation or combination of some of them. After separating off the dispersing water, a moist grafted polymer is obtained, which usually has residual water content of up to 75 wt. %.
By the process according to the invention there is only partial separation of the auxiliary substances, such as, for example, emulsifiers, decomposition products of the radical formers, buffer substances, so that a considerable portion of up to 100% of the auxiliary substances remains in the graft polymer and consequently in the end product, that is to say the moist grafted polymer.
As there is no further purification step, all byproducts and impurities that will not part with the water will rest in the core-shell polymer powder.

**Still another aspect of the invention is an** impact modified thermoplastic composition comprising at least one thermoplastic polymer and a core-shell copolymer impact modifier particle as obtained by process as described before.

**With regard to** the thermoplastic polymer that is part of the thermoplastic composition according to the invention it can be chosen among but not limited to, poly(vinyl chloride) (PVC), polyesters as for example poly (ethylene terephtalate) (PET) or poly(butylen terephtalate) (PBT)or polylactic acid (PLA), polystyrene (PS), polycarbonates (PC), polyethylene, poly (methyl methacrylate)s , (meth)acrylic copolymers, thermoplastic poly(methyl methacrylate-coethylacrylates), poly(alkylene-terephtalates), poly vinylidene fluoride , les poly(vinylidenchloride), polyoxymethylen (POM) , semi-crystalline polyamides, amorphous polyamides, semi-crystalline copolyamides, amorphous copolyamides, polyetheramides, polyesteramides, copolymers of styrene and acrylonitrile (SAN), and their respective mixtures. According to a preferred embodiment the thermoplastic resin composition comprises polycarbonate (PC) and/or polyester (PET or PBT) or PC or polyester alloys. The alloys for example may be PC/ABS, PC/polyester or PC/PLA just to mention a few.

**With regard to the constituents of the composition,** the proportions between the core-shell polymer of the invention and the thermoplastic polymer are between 0.5/99.5 and 20/80, preferably between 2/98 and 15/75.

### Methods

Estimation of the particle size of the initial impact modifiers at the end of the emulsion polymerization is performed by capillary hydrodynamic fractionation (CHDF).

For the estimation of weight average powder particle size, particle size distribution and ratio of fine particles a Malvern Mastersizer S apparatus with a 300mm lenses, measuring a range from 0,5-880µm is used.
D (v, 0.5) is the particle size at which 50% of the sample has size less then and 50% of the sample have a size larger then that size, or in other words the equivalent volume diameter at 50% cumulative volume. This size is also known as volume medium diameter that is related to the mass median diameter by the density of the particles by the density of the particles assuming a size independent density for the particles.
D (v, 0.1) is the particle size at which 10% of the sample is smaller then that size, or in other words the equivalent volume diameter at 10% cumulative volume.
D (v, 0.9) is the particle size at which 90% of the sample are smaller then that size.
D[4,3] is the volume average diameter.
The Span is expressing the width of the particle size distribution. The smaller the parameter is the smaller the particle size distribution is.
The norm 9276-1 "Presentation of results of particle size analysis part 1: graphical representation" and the norm 9276-2 "Presentation of results of particle size analysis part 2: Calculation of average particle sizes/diameters and moments from particle size distribution" are used.

Procedure to obtain the pH of the final powder:
5 g of dried powder are dispersed in 20 mL of demineralised water under stirring during 10 min. at 45°C. Then, the slurry is filtrated on a Wattman filter in paper. The pH of the filtrated water is measured at room temperature.
The pH value is obtained using a Fisher Scientific glass probe connected to an Eutech Instrument pH 200 series pH-meter preliminary calibrated with standard buffer solutions.

Preparation of impact modified compositions, the respective impact modifier powders are mixed with the thermoplastic resin polycarbonate Lexan ML5221 from SABIC(at 5wt% with the aide of an extruder type Clextral (double diameter 25mm, length 700mm) using temperatures between from 100°C up to 320°C depending on the respective zones throughout the whole extruder.

The impact strength of the thermoplastic composition is measured in accordance with the norm ISO 180-2000. Test specimen are Type 1A.

In the following examples the melt flow index (MVI) of the polymeric composition is measured in accordance with ISO-1333-2005 at 300°C using a 2.16kg load. Samples were prepared.
The MVI change is expressed in percentage of change from the prepared sample at 300° after 25 min compared to the value after 6min. As the polymer composition gets more fluid the MVI value at 25 min is larger then the value at 6 min.

The color change is observed by measuring the parameter b*. The b* value is used to characterize the principal yellowing off the samples. The b* value measures the blue and the yellow of the colour. Colours tending toward the yellow have a positive b* value while those tending toward the blue have a negative b* value. The b* values is measured using a colorimeter (especially according to the ASTM E 308 standard).

If the initial color is close to zero it is considered that the thermoplastic composition comprising the impact modifiers of the invention is acceptable. The b* should not larger then 4.
The colour change is observed as a function of time under different conditions: samples kept at 120°C and samples kept at 90°C and 95% humidity.

### [Examples]

As commercial products the following product was tested as well: Paraloid^{™} EXL2691A is an MBS impact modifier from ROHM and HAAS.

### Example 1 (according to the invention) of a latex according to figure 2b

### First stage: Polymerization of core 1 and core 2

To a 20 litres high-pressure reactor was charged: de-ionized water 116.5 parts, emulsifier sodium salt of dodecyl benzene sulfonic acid 0.1 parts, 1,3-butadiene 20 parts, t-dodecyl mercaptan 0.1 parts, and p-menthane hydroperoxide 0.1 parts as an initial charge . The solution was heated, with agitation, to 43°C at which time a redox-based catalyst solution was charged (water 4.5 parts, sodium tretrapyrophosphate 0.3 parts, ferrous sulfate 0.004parts and dextrose 0.3 parts), effectively initiating the polymerization. Then the solution was further heated to 56°C and held at this temperature for a period of three hours.
Three hours after polymerization initiation, a second monomer charge (71 parts BD, t-dodecyl mercaptan 0.2 parts), additional emulsifier and reductant charge (de-ionized water 30.4 parts, emulsifier sodium salt of dodecyl benzene sulfonic acid 0.9 parts, dextrose 0.5 parts) and additional initiator (p-menthane hydroperoxide 0.8 parts) were continuously added over eight hours. Following the completion of the second monomer addition, the remaining emulsifier and reductant charge plus initiator was continuously added over an additional five hours.
Thirteen hours after polymerization initiation, the solution was heated to 68° C, additional initiator (p-menthane hydroperoxide 0.09 parts) and Styrene (0.9 parts) were continously added during additional 3 hours, and allowed to react until at least twenty hours had elapsed since polymerization initiation, producing butadiene core1-BD/ST gradient core2 latex (R2).
The resultant polybutadiene rubber latex (R2) contained 40.3wt% solids and had a average particle size of about 180 nm.

### Second stage: Polymerization of shell 1 and shell 2

Into a 3.9 litres reactor was charged 80.75 parts, on a solids basis, of polybutadiene rubber latex R2, 1.3 parts de-ionized water, and 0.004 parts sodium formaldehyde sulfoxylate. The solution was agitated, purged with nitrogen, and heated to 55°C. When the solution reached 62°C, continuously during 60 minutes 7.1 part of styrene, 0.09 parts of divinyl benzene and 0.03 part of t-butyl hydroperoxide are added. Afterwards the temperature is increased to 75°C for 40 minutes. In batch, a mixture of 1.4 parts de-ionized water, 0.003 parts sodium formaldehyde sulfoxylate is added,then continuously 10.5 parts methyl methacrylate, 0.13 parts de divinyl benzene and 0.04 parts t-butyl hydroperoxide initiator were added over 30 minutes. Thirty minutes after the previous addition 0.1 parts t-butyl hydroperoxide were added to the reactor at once, followed by a hold period of 60 minutes.

Following the 60-minute hold period, a stabilization emulsion was added to the graft copolymer latex. The stabilization emulsion was prepared by mixing 5.4 parts de-ionized water (based on graft copolymer mass), 0.1 parts sodium salt of dodecyl benzene sulfonic acid, 0.1 parts dilauryl thiodipropionate, and 0.24 parts triethyleneglycol-bis[3-(3-t-butyl-4-hydroxy-5-methylphenyl)-propionate].
The resultant core shell latex (E2) had an average particle size of about 190 nm.

### Buffer solution for adjusting the pH and to coagulate

In a 2 litres calibrated flask are added 57.3g Na₂HPO₄ (disodium hydrogeno phosphate) and 54.9g KH₂PO₄ (potassium dihydrogeno phosphate) and is completed to 2 litres with demineralized water.
The pH is measured at 6.8 (0.4mol/l)

### Examples of coagulation

In a jacketed vessel of 3 L, equipped with a stirrer is put successively 500 g of latex of core-shell particles from example 1 and under stirring at 300 r/min the buffer solution at pH=6.8 for having a solid content of 14.1%. Coagulation occurs very rapidly. The heat is raised to 30°C . After 15 min. at 30°C under stirring, the temperature is increased up to 80 °C and maintained for further 30 min. at this temperature. Then is cooled down to 40 °C. The pH is measured at 6.8. The slurry is filtrated on Buchner paper filter and the powder is recovered. The powder is put in a ventilated oven during 48 h at 50°Cand recovered after complete drying.

### Example 2

The latex from example 1 is coagulated with a mixture of CaCl₂ and Na₂HPO₄.
17.5 g CaCl₂a/2*H2O is completed to 332g with demineralized water. Additionally 647 g of a solution of Na₂HPO₄ at 0.4mol/l is prepared. The two solutions are mixed in a 2 litres calibrated flask and are completed to 2 litres with demineralized water.
The coagulation according to the quantities and conditions of the previous example for coagulation is repeated while using the buffer electrolyte solution of example 2. The pH of the coagulated product is 6.8.

| | | |
|---|---|---|
| | Coagulating agent | pH adjustment at the end to obtain neutral pH |
| EXL2691A | / (Spray dried) | No |
| Example 1 | Phosphate buffer solution | Yes, inherent to buffer solution |
| Example 2 | CaCl2/Phosphate buffer solution | Yes, inherent to buffer solution |

### Samples are aged at 120°C

| | | |
|---|---|---|
| | b* initial | b* after 4 days |
| | | |
| EXL2691A | -2.9 | -0.4 |
| Example 1 | 0.3 | 1.6 |
| Example 2 | -1.8 | 1.8 |

It can be seen from the examples that with the process described by the present invention, it is possible to achieve modified PC with good initial b* and keeping low b* values versus time after aging at 120°C.

| | | |
|---|---|---|
| | IZOD impact strength [kj/m2] at | |
| | 23°C | -20°C |
| EXL2691A | 36.2 | 8.2 |
| Example 1 | 22.7 | 8.6 |
| Example 2 | 34.8 | 7.5 |

It can be seen from the examples that with the process described by the present invention, it is possible to achieve modified PC with good impact resistance at room temperature and especially at low temperature.

| | |
|---|---|
| | Delta MVI (%) |
| PC without core shell | 18.2 |
| EXL2691A | -0.4 |
| Example 1 | 65.6 |
| Example 2 | 34.6 |

It can be seen from the examples that with the process described by the present invention, it is possible to achieve modified PC with good impact resistance and high fluidity in contrary to PC modified with comparative products.

The figures are examples for core-shell structures
Figure 1 : Core-shell particle consisting of a core and one shell
Figure 2 a: Core-shell particle consisting of a core and three shells
Figure 2 b: Core-shell particle consisting of a core and three layers: core 2, shell 1 and shell 2
Figure 3 : Core-shell particle consisting of a core and two shells

## Claims

1. Process for producing an impact modifier comprising following steps
a) synthesis of a core-shell copolymer by emulsion polymerization
b) coagulation of the core shell polymer at a pH between 4 and 8 by addition of an aqueous electrolyte solution,
wherein the aqueous electrolyte solution comprises an aqueous buffer solution.

2. Process according to claim 1, wherein aqueous electrolyte solution consists of an aqueous buffer solution.

3. Process according to any of claim 1 or 2, wherein the pH of the coagulation step b) is between 4 and 7.5 and preferably between 6 and 7.

4. Process according to any of claim 1 to 3, wherein the aqueous buffer solution is an aqueous phosphate buffer solution.

5. Process according to claim 4, wherein the aqueous phosphate buffer solution comprises a buffer based on at least on compound chosen from tri pottasium phosphates or dipotassium or monopotassium phosphates or trisodium phosphates or disodium or monosodium phosphates or mixtures thereof.

6. Process according to any of claim 1 to 5, wherein the process comprises a further step ab) between step a) and step b), **characterized by** controlling the pH value of the core-shell copolymer particle after the synthesis step a).

7. Process according to any of claim 1 to 5, wherein the process comprises a further step c) - after step b) - characterized that the pH of the coagulated core-shell polymer is adjusted at a pH between 6 and 7.5.

8. Process according to any of claim 1 to 7, wherein the pH value of the final core-shell impact modifier should be smaller then 7.5, advantageously smaller then 7.

9. A thermoplastic polymer composition comprising
a) a thermoplastic polymer
b) a core-shell impact modifier
wherein the core-shell impact modifier is made by a process according to any of claim 1 to 8.

10. The thermoplastic polymer composition according to claim 9, characterized that the thermoplastic polymer is chosen from poly(vinyl chloride) (PVC), polyesters as for example poly (ethylene terephtalate) (PET) or poly(butylen terephtalate) (PBT)or polylactic acid (PLA), polystyrene (PS), polycarbonates (PC), polyethylene, poly (methyl methacrylate)s , (meth)acrylic copolymers, thermoplastic poly(methyl methacrylate-coethylacrylates), poly(alkylene-terephtalates), poly vinylidene fluoride , les poly(vinylidenchloride), polyoxymethylen (POM) , semi-crystalline polyamides, amorphous polyamides, semi-crystalline copolyamides, amorphous copolyamides, polyetheramides, polyesteramides, copolymers of styrene and acrylonitrile (SAN), or their mixtures.

11. The thermoplastic polymer composition according to any of claims 9 to 10, characterized that the thermoplastic polymer is chosen from polycarbonate (PC) and/or polyester (PET or PBT) or PC or polyester alloys.

12. The thermoplastic polymer composition according to any of claims 9 to 11, characterized that the thermoplastic polymer is chosen from PC/ABS (poly(Acrylonitrile-co-butadiene-co-styrene), PC/polyester or PC/PLA.

13. The thermoplastic polymer composition according to any of claims 9 to 12, characterized that the glass transition temperature of the polymeric core less then 0°C, preferably less then -10°C, advantageously less then -20°C and most advantageously less then -25°C and more most advantageously less then -40°C.

14. The thermoplastic polymer composition according to any of claims 9 to 13, characterized that the polymeric core comprises polybutadiene.
